# DEMANDE DE BREVET EUROPEEN

(11) **EP 2 821 168 A1**
(43) Date de publication de la demande: **07.01.2015**
(21) Numéro de dépôt: 13175192.7
(22) Date de dépôt: 04.07.2013
(51) Int. Cl.: B23B 27/10, B23B 29/04, B23B 31/00, B23B 27/00

(54) **Système d'usinage intérieur**

(71) Demandeur: Applitec Moutier S.A., 2740 Moutier (CH)
(72) Inventeur: Kohler, Pascal, 2740 Moutier (CH); Schaller, Vincent, 2742 Perefitte (CH)
(74) Mandataire: GLN SA

(57) **Abrégé**

La présente invention concerne un système d'usinage intérieur comprenant un porte-outil (10) et un barreau d'usinage (12) intérieur destiné à usiner une cavité dans une pièce et muni d'une arête de coupe (13), dans lequel le porte-outil (10) comprend :
- un alésage (14) à l'intérieur duquel le barreau d'usinage (12) est destiné à prendre place, et
- un écrou (16) de serrage agencé pour être serré sur l'extrémité du porte-outil (10) comprenant l'alésage (14) et doté d'une ouverture (20) permettant le passage de l'arête de coupe (13) du barreau (12).

Le barreau d'usinage (12) comprend :
- une zone de coupe (12a) et
- une zone de maintien (12b) destinée à être agencée à l'intérieur du porte-outil (10), le système d'usinage comprenant une première et une deuxième zones d'appui, respectivement aux première et deuxième extrémités de la zone de maintien (12b).

Pour améliorer la rigidité du serrage et la précision du positionnement, les première et deuxième zones d'appui sont agencées de manière à créer une première et une deuxième forces d'appui, lesdites forces d'appui étant concourantes et situées dans un plan dans lequel s'exercent les forces de coupe et passant par l'axe longitudinal du porte-outil (10), de manière à contraindre le barreau d'usinage (12) contre une paroi intérieure de l'alésage (14).

## Description

### Domaine technique

La présente invention se rapporte au domaine de l'usinage et concerne, plus particulièrement un système d'usinage comportant un porte-outil et un barreau d'usinage intérieur destiné à usiner une cavité dans une pièce, le barreau étant disposé dans un alésage que comporte le porte-outil. Dans ce genre de système, l'assemblage du barreau sur le porte-outil et son positionnement longitudinal et angulaire est primordial, afin d'optimiser les étapes de réglage de la machine lors d'un changement d'outil, mais également afin de garantir une bonne rigidité et un maintien parfait de la position du barreau au cours d'une opération d'usinage.

### Etat de la technique

On connait du document DE19800424 un système d'usinage intérieur, dans lequel le positionnement du barreau d'usinage sur le porte-outil est assuré par une double-butée. L'arrière du barreau comprend une face biseautée, agencée pour coopérer avec une goupille formant une butée arrière. Elle permet également d'orienter angulairement le barreau d'usinage. De plus, le barreau est solidaire d'une bague formant une butée avant, sur laquelle un écrou de serrage exerce un appui longitudinal, pour mettre le barreau en appui sur ses butées avant et arrière.

Ainsi, le barreau d'usinage est maintenu par la pression longitudinale exercée par l'écrou de serrage, qui doit être fortement serré. Le barreau d'usinage doit être ajusté très exactement avec de l'alésage, car le maintien du barreau à l'intérieur de l'alésage n'est effectué par aucun serrage radial ou concentrique, ce qui, en cours d'usinage, peut engendrer des vibrations ainsi qu'une incertitude de positionnement du barreau d'alésage.

La présente invention a pour but de proposer une variante avantageuse d'un système d'usinage intérieur, exempte des inconvénients susmentionnés et dont la rigidité du serrage et la précision du positionnement sont améliorées.

### Divulguation de l'invention

De façon plus précise, l'invention concerne un système d'usinage tel que proposé dans les revendications.

### Brève description des dessins

D'autres détails de l'invention apparaîtront plus clairement à la lecture de la description qui suit, faite en référence au dessin annexé dans lequel :

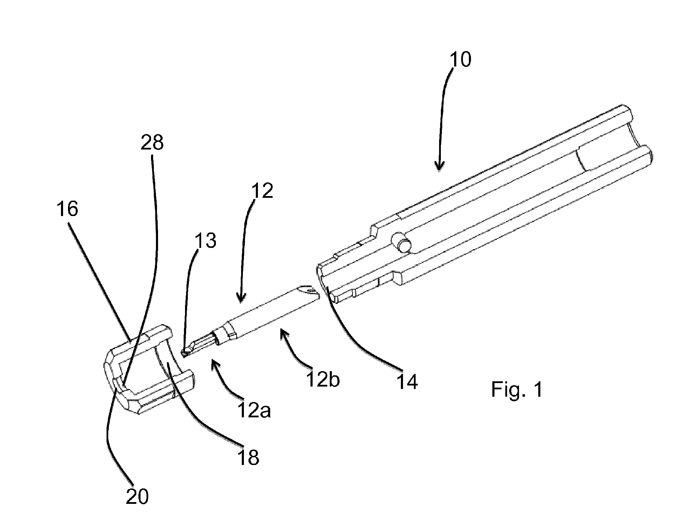

- la figure 1 est une vue en perspective, en éclaté et en écorché partiel, d'un système d'usinage selon l'invention,

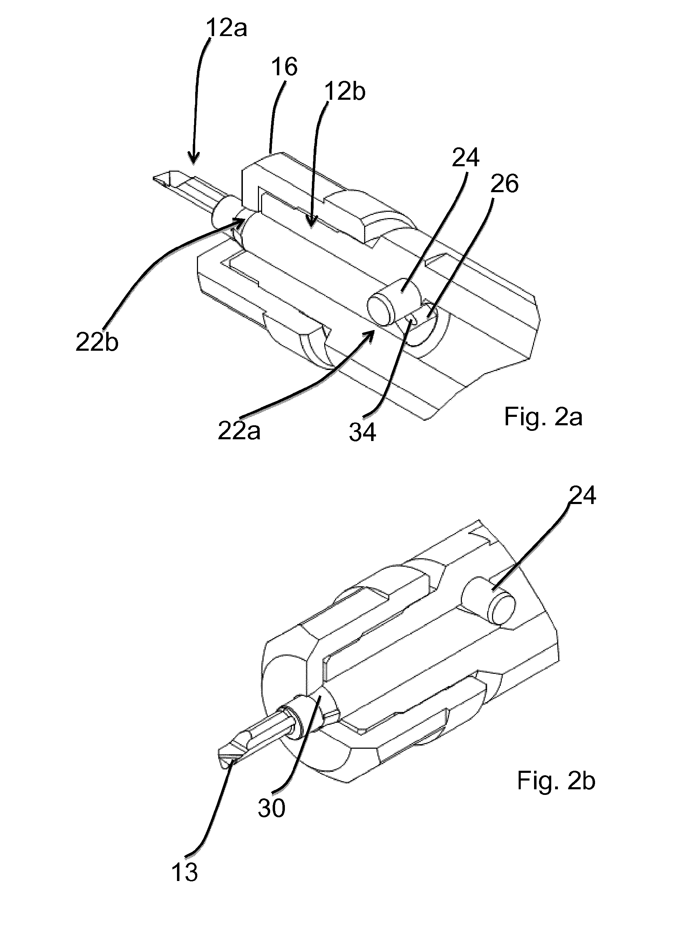

- les figures 2a et 2b sont deux vues en perspective et en écorché, selon deux angles différents, du système d'usinage de la figure 1, les différents éléments étant assemblés les uns aux autres,
- la figure 3 est une vue en coupe du système assemblé et la figure 4 est un agrandissement d'une partie de la figure 3, et
- la figure 5 illustre un autre détail du système d'usinage selon l'invention.

### Mode de réalisation de l'invention

L'invention concerne un système d'usinage comprenant un porte-outil 10 et un barreau d'usinage 12 intérieur destiné à usiner une cavité dans une pièce et muni d'une arête de coupe 13.

Le porte-outil 10 est creux et comprend un alésage 14 à l'intérieur duquel le barreau 12 est destiné à prendre place. L'alésage 14 et le barreau 12 sont de préférence cylindriques et le diamètre du barreau 12 est légèrement inférieur à celui de l'alésage 14.

Le système comprend également un écrou 16 de serrage agencé pour être serré sur l'extrémité du porte-outil 10 comprenant l'alésage 14. De préférence, l'écrou 16 est agencé de manière à être vissé sur la paroi extérieure du porte-outil 10, au niveau de l'alésage 14. Le profil intérieur de l'écrou 16 peut également présenter des portions de différents diamètres, la portion 18 située à l'extrémité ouverte de l'écrou 16 peut avantageusement être ajustée sur une portion correspondante de la paroi extérieure du porte-outil 10, pour améliorer le guidage de l'écrou 16 lors de son serrage. L'écrou 16 est encore dimensionné de manière à ne pas venir en butée contre le porte-outil 10. Il peut présenter un moletage pour favoriser sa manutention.

L'écrou 16 comporte encore une ouverture 20 permettant le passage du barreau 12 lorsqu'il est serré sur le porte-outil 10. Le centre de l'ouverture 20 est coaxial avec le centre de l'alésage 14. Cette ouverture 20 revêt une importance particulière dans le cadre de la présente invention et sera décrite plus en détails ci-dessous.

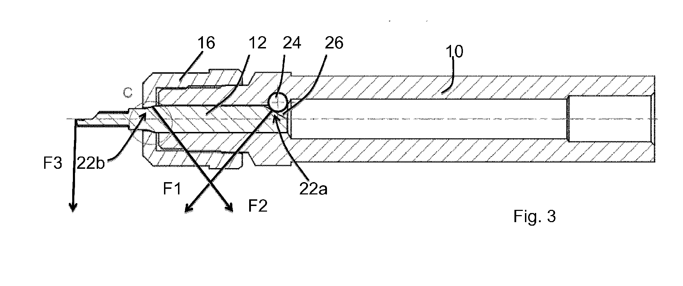

Le barreau d'usinage 12 comprend une zone de coupe 12a et une zone de maintien 12b. Comme on peut le voir particulièrement sur la figure 3, lorsque le barreau 12 est assemblé sur le porte-outil 10, la zone de coupe 12a est extérieure au porte-outil 10 de manière à pouvoir réaliser l'opération d'usinage. A contrario, la zone de maintien 12b est située à l'intérieur du porte-outil 10.

Selon l'invention, le système d'usinage comprend une première 22a et une deuxième 22b zones d'appui, respectivement à la première extrémité de la zone de maintien 12b située du côté opposé à l'arête de coupe 13, et à la deuxième extrémité de la zone de maintien 12b.

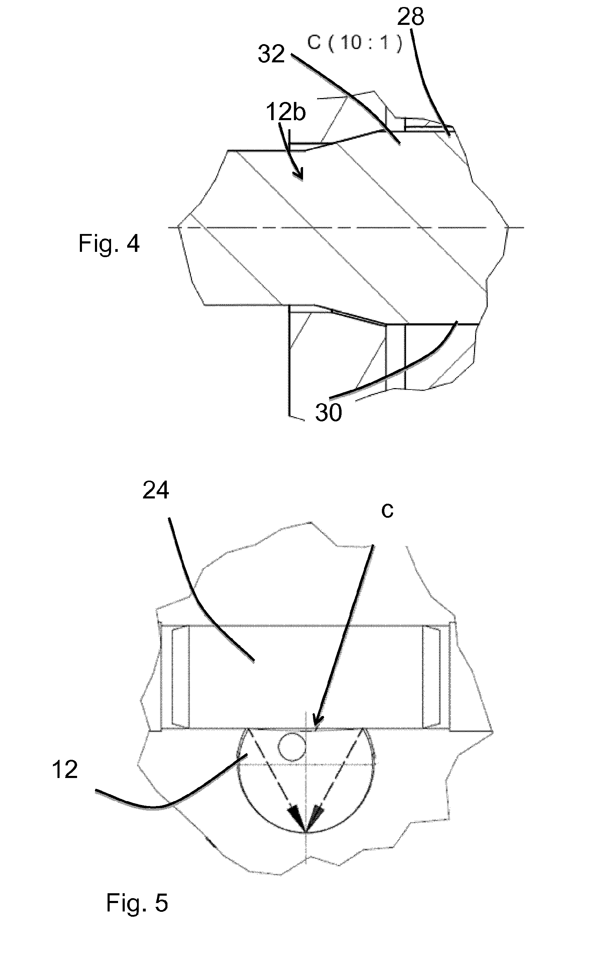

La première zone d'appui 22a est formée, d'une part, par une barrette d'appui 24, solidaire du porte-outil 10 et traversant l'alésage 14 parallèlement à l'arête de coupe 13 et perpendiculairement à l'axe longitudinal du porte-outil 10. D'autre part, la première extrémité de la zone de maintien 12b comprend une surface biseautée 26, définissant une ligne d'appui en contact avec la barrette 24 perpendiculaire aux forces de coupe subies par le barreau 12 (figure 5). En variant et comme proposé à la figure 5 la surface biseautée pourrait être concave (c), la ligne d'appui de la surface concave étant perpendiculaire aux forces de coupe.

La barrette 24 est avantageusement excentrée par rapport au centre de l'alésage 14, c'est-à-dire que l'axe central de la barrette 24 ne croise pas le centre de l'alésage 14. Plus particulièrement, la barrette peut être partiellement noyée dans la paroi de l'alésage 14.

Ainsi, la mise en appui de la surface biseautée 26 sur la barrette 24, manuellement ou par l'effet du serrage de l'écrou 16, comme on le comprendra ci-après, permet de définir la position longitudinale et l'orientation angulaire du barreau 12.

La deuxième zone d'appui 22b est formée par une première portion conique 28 de la paroi de l'ouverture 20 de l'écrou 16 de serrage, agencée pour coopérer avec une deuxième portion conique 30 du barreau d'usinage 12, ménagée à la deuxième extrémité de la zone de maintien 12b. Plus particulièrement, la première portion conique 28 s'élargit du côté de l'intérieur de l'écrou 16. Du côté du petit diamètre du cône, la première portion conique 28 pourra être interrompue et prolongée par une portion droite 32, cylindrique, de diamètre supérieur à la zone correspondante du barreau 12, afin de garantir que l'appui du barreau 12 sur l'ouverture 20 se fasse exclusivement au niveau de la deuxième portion conique 30.

La deuxième portion conique 30 du barreau d'usinage 12 est asymétrique et n'est pas disposée de manière identique sur toute la périphérie du barreau 12. La deuxième portion conique 30 est agencée de manière à ce que le barreau d'usinage 12, dans sa zone diamétralement opposée à la deuxième zone d'appui 22b, ne soit pas en contact avec l'écrou 16 de serrage.

Comme on peut le voir particulièrement sur la figure 4, on peut obtenir une telle asymétrie en ménageant un dégagement diamétralement opposé à la deuxième zone d'appui 22b. On peut, pour ce faire, réaliser la deuxième portion conique en deux parties, une première pour prendre appui contre la première portion conique 28 de l'écrou 16, et une deuxième agencée pour ne pas être en appui contre cette portion conique 28 de l'écrou. La deuxième partie peut présenter une portion conique de diamètre inférieur ou être décalée longitudinalement du côté de la première extrémité du barreau 12. On pourra adoucir le seuil formé entre les deux parties de la deuxième portion conique.

On pourra encore relever que l'asymétrie du contact entre le barreau d'usinage 12 et l'écrou de serrage pourrait être obtenue en ménageant un dégagement au niveau de l'écrou plutôt que sur l'outil

Les première 22a et deuxième 22b zones d'appui sont agencées de manière à ce que la force de serrage F de l'écrou crée une première force d'appui F1 et une deuxième force d'appui F2 concourantes et situées dans un plan dans lequel s'exercent les forces de coupe F3 et passant par l'axe longitudinal du porte-outil 10. En d'autres termes, les zones d'appui génèrent une triangulation de forces permettant de contraindre le barreau 12 contre la paroi intérieure de l'alésage 14. Grâce au fait que le barreau 12 est de diamètre légèrement inférieur à celui de l'alésage 14, le barreau est mis en appui selon une ligne clairement définie, cette ligne étant incluse dans le plan qui contient les forces F1, F2 et F3. De manière avantageuse, la contrainte générée par les zones d'appui s'exerce dans la même direction que les contraintes générées par les forces de coupe. L'outil étant déjà parfaitement positionné, de manière particulièrement rigide par son appui dans l'alésage 14, les forces de coupe n'ont pas d'incidence sur la position du barreau 12.

Ainsi, le système d'usinage selon l'invention permet non seulement de positionner, sans erreur, longitudinalement et angulairement le barreau d'usinage 12 en référence au porte-outil 10, mais de plus, il procure un effet de serrage latéral du barreau 12, le long de la paroi interne de l'alésage 14. Les forces de maintien sont ainsi mieux réparties et il n'est pas nécessaire de serrer fortement l'écrou 16 pour obtenir un positionnement optimal. On réduit d'autant les contraintes appliquées au niveau de la barrette. L'amélioration du contact entre le barreau 12 et le porte-outil 10 permet également de réduire les vibrations en cours d'usinage.

L'homme du métier pourra ajuster le pas de vis de l'écrou 16 et les angles de cônes, selon les forces de serrages souhaitées et selon les contraintes d'usinage à tenir.

On pourra encore prévoir que le barreau d'usinage 12 comprend une ouverture traversante 34 orientée selon l'axe longitudinal dudit barreau 12, permettant le passage de lubrifiant vers l'arête de coupe.

## Revendications

1. Système d'usinage intérieur comprenant un porte-outil (10) et un barreau d'usinage (12) intérieur destiné à usiner une cavité dans une pièce et muni d'une arête de coupe (13), dans lequel
le porte-outil (10) comprend :
- un alésage (14) à l'intérieur duquel le barreau d'usinage (12) est destiné à prendre place, et
- un écrou (16) de serrage agencé pour être serré sur l'extrémité du porte-outil (10) comprenant l'alésage (14) et doté d'une ouverture (20) permettant le passage de l'arête de coupe (13) du barreau (12), et
le barreau d'usinage (12) comprend :
- une zone de coupe (12a) et
- une zone de maintien (12b) destinée à être agencée à l'intérieur du porte-outil (10), le système d'usinage comprenant une première et une deuxième zones d'appui, respectivement aux première et deuxième extrémités de la zone de maintien (12b),
**caractérisé en ce que** lesdites première et deuxième zones d'appui sont agencées de manière à créer une première et une deuxième forces d'appui, lesdites forces d'appui étant concourantes et situées dans un plan dans lequel s'exercent les forces de coupe et passant par l'axe longitudinal du porte-outil (10), de manière à contraindre le barreau d'usinage (12) contre une paroi intérieure de l'alésage (14).

2. Système d'usinage intérieur selon la revendication 1, **caractérisé en ce que** la première zone d'appui comprend une barrette d'appui (24), solidaire du porte-outil (10) et traversant l'alésage (14) parallèlement à l'arête de coupe et perpendiculairement à l'axe longitudinal du porte-outil (10) et **en ce que** la première extrémité de la zone de maintien (12b), située du côté opposé à la zone de coupe (12a), comprend une surface biseautée (26), définissant une ligne d'appui perpendiculaire aux forces de coupe subies par le barreau (12).

3. Système d'usinage intérieur selon la revendication 2, **caractérisé en ce que** ladite barrette est excentrée par rapport au centre de l'alésage (14).

4. Système d'usinage intérieur selon l'une des revendications précédentes, **caractérisé en ce que** la deuxième zone d'appui est formée par une première portion conique (28) de la paroi de l'ouverture (20) de l'écrou (16) de serrage, agencée pour coopérer avec une deuxième portion conique du barreau d'usinage (12), ménagée à la deuxième extrémité de la zone de maintien (12b).

5. Système d'usinage intérieur selon la revendication 4, **caractérisé en ce que** la deuxième portion conique est asymétrique et **en ce que** le barreau d'usinage (12), dans sa zone diamétralement opposée à la deuxième zone d'appui, n'est pas en contact avec l'écrou (16) de serrage.

6. Système d'usinage intérieur selon la revendication 5, **caractérisé en ce que** ledit barreau (12) comporte un dégagement diamétralement opposé à la deuxième zone d'appui.

7. Système d'usinage intérieur selon l'une des revendications précédentes, **caractérisé en ce que** ledit barreau d'usinage (12) comprend une ouverture (34) traversante orientée selon l'axe longitudinal dudit barreau (12), permettant le passage de lubrifiant vers l'arête de coupe.
